# DEMANDE DE BREVET EUROPEEN

(11) **EP 1 084 946 A1**
(43) Date de publication de la demande: **21.03.2001**
(21) Numéro de dépôt: 00402500.3
(22) Date de dépôt: 11.09.2000
(51) Int. Cl.: B63B 59/02, F16M 13/02, F16B 2/20

(54) **Système de rangement d'un pare-battage à bord d'un bateau**

(30) Priorité: 13.09.1999 FR 9911431
(71) Demandeur: PLASTIMO, 56100 Lorient (FR)
(72) Inventeur: Arribard, Moise Yvonnick André, 56270 Ploemeur (FR)
(74) Mandataire: Habasque, Etienne Joel Jean-François

(57) **Abrégé**

Ce système de rangement d'un pare-battage à bord d'un bateau, est caractérisé en ce qu'il comporte deux pièces d'accrochage (2,3) adaptées pour être fixées symétriquement à distance l'une de l'autre sur une pièce de support (4) du bateau, définissant entre elles un espace de rangement du pare-battage et comportant chacune une embase (5,6) de fixation de cette pièce d'accrochage sur la pièce de support du bateau et à partir de laquelle s'étend un bras d'accrochage (7,8) d'une extrémité (9,10) du pare-battage (1), sollicité élastiquement en direction de la pièce de support du bateau (4) pour plaquer le pare-battage (1) contre celle-ci.

## Description

La présente invention concerne un système de rangement d'un pare-battage à bord d'un bateau.

De tels pare-battages sont utilisés à bord des bateaux pour réduire les risques de dégradation de la coque de ceux-ci lorsqu'ils sont à quai par exemple.

Lorsqu'ils ne sont pas utilisés, ces pare-battages sont rangés à bord du bateau la plupart du temps dans des paniers fixés sur une pièce de support quelconque de ce bateau.

Cependant, ceci présente un certain nombre d'inconvénients notamment en raison de l'encombrement de ces paniers et de leur fragilité.

Le but de l'invention est donc de résoudre ces problèmes.

A cet effet, l'invention a pour objet un système de rangement d'un pare-battage à bord d'un bateau, caractérisé en ce qu'il comporte deux pièces d'accrochage adaptées pour être fixées symétriquement à distance l'une de l'autre sur une pièce de support du bateau, définissant entre elles un espace de rangement du pare-battage et comportant chacune une embase de fixation de cette pièce d'accrochage sur la pièce de support du bateau et à partir de laquelle s'étend un bras d'accrochage d'une extrémité du pare-battage, sollicité élastiquement en direction de la pièce de support du bateau pour plaquer le pare-battage contre celle-ci.

L'invention sera mieux comprise à la lecture de la description qui va suivre, donnée uniquement à titre d'exemple et faite en se référant aux dessins annexés, sur lesquels :
- la Fig.1 représente une vue de coté d'un système de rangement selon l'invention en position de fixation d'un pare-battage;
- la Fig.2 représente une vue de coté d'un système de rangement selon l'invention, dans laquelle aucun pare-battage n'est rangé; et
- les Figs.3 et 4 représentent respectivement des vues en perspective et de face d'une pièce d'accrochage entrant dans la constitution d'un système de rangement selon l'invention.

On a en effet représenté sur ces figures, un système de rangement d'un pare-battage à bord d'un bateau.

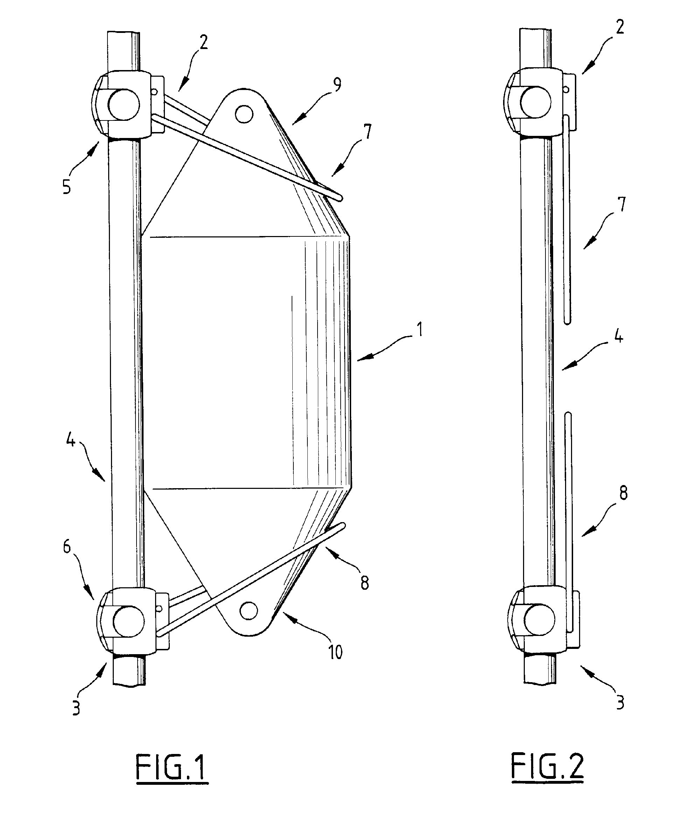

Ce pare-battage est désigné par la référence générale 1 sur la figure 1 et le système de rangement comporte deux pièces d'accrochage désignées par les références générales 2 et 3 sur cette figure, adaptées pour être fixées symétriquement à distance l'une de l'autre sur une pièce de support du bateau désignée par la référence générale 4, de manière à définir entre elles un espace de rangement du pare-battage.

Chaque pièce d'accrochage comporte alors une embase de fixation par exemple 5 et 6, à partir de laquelle s'étend un bras d'accrochage 7 et 8 respectivement, du pare-battage.

Ces bras d'accrochage sont adaptés pour s'engager sur les extrémités du pare-battage désignées par les références générales 9 et 10 et sont sollicités élastiquement en direction de la pièce de support 4 du bateau pour plaquer le pare-battage contre celle-ci.

Comme cela est illustré sur la figure 2, lorsqu'aucun pare-battage n'est rangé entre ces pièces, les bras d'accrochage de ceux-ci s'étendent le long de la pièce de support 4.

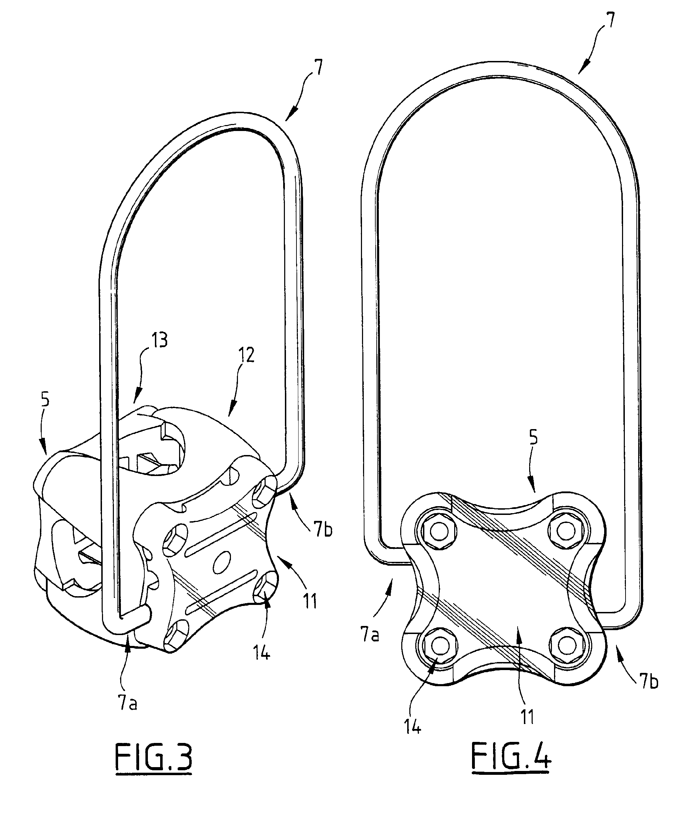

En fait et comme on peut le voir sur les figures 3 et 4, chaque bras d'accrochage par exemple 7 est formé par une boucle d'un brin métallique dont les extrémités par exemple 7a et 7b sont associées de façon décalée à l'embase 5 pour assurer la fonction de rappel élastique en position escamotée du bras.

Chaque embase peut comporter par exemple trois parties, à savoir une partie de façade désignée par la référence générale 11, une entretoise désignée par la référence générale 12 et une plaque de fond désignée par la référence générale 13, cette plaque de fond et l'entretoise présentant des formes complémentaires à celle de la pièce de support 4 du bateau sur laquelle elle doit être fixée.

L'assemblage de ces différentes pièces les unes aux autres est assuré par exemple par des moyens de vissage désignés par la référence générale 14 par exemple.

Ces moyens de vissage permettent alors la mise en place et le serrage de l'embase en position sur la pièce de support du bateau.

On conçoit alors qu'une telle structure présente un certain nombre d'avantages, notamment au niveau de l'encombrement réduit des pièces entrant dans sa constitution et donc de la réduction des risques de dégradation de celles-ci.

On conçoit également que ce système peut être utilisé pour ranger des pare-battages de tailles différentes par une simple adaptation de la position relative des pièces d'accrochage.

Bien entendu, d'autres modes de réalisation encore d'un tel système peuvent être envisagés.

## Revendications

1. Système de rangement d'un pare-battage à bord d'un bateau, caractérisé en ce qu'il comporte deux pièces d'accrochage (2,3) adaptées pour être fixées symétriquement à distance l'une de l'autre sur une pièce de support (4) du bateau, définissant entre elles un espace de rangement du pare-battage et comportant chacune une embase (5,6) de fixation de cette pièce d'accrochage sur la pièce de support du bateau et à partir de laquelle s'étend un bras d'accrochage (7,8) d'une extrémité (9,10) du pare-battage (1), sollicité élastiquement en direction de la pièce de support du bateau (4) pour plaquer le pare-battage contre celle-ci.

2. Système selon la revendication 1, caractérisé en ce que le bras d'accrochage est formé par une boucle d'un brin métallique (7) dont les extrémités (7a,7b) sont associées de façon décalée à l'embase (5).

3. Système selon la revendication 1 ou 2, caractérisé en ce que l'embase comporte une partie de façade (11), une entretoise (12) et une plaque de fond (13), la plaque de fond (13) et l'entretoise (12) comportant des empreintes de formes complémentaires à la pièce de support du bateau sur laquelle l'embase doit être fixée et en ce que ces différents éléments sont fixés les uns aux autres par des moyens de vissage (14).
